# EUROPEAN PATENT SPECIFICATION

(11) **EP 2 631 175 B1**
(45) Date of publication and mention of the grant of the patent: **18.09.2019**
(21) Application number: 12198610.3
(22) Date of filing: 20.12.2012
(51) Int. Cl.: B64C 27/32, B64C 27/46, B64C 27/615

(54) **Adaptive rotor blade**
Adaptives Rotorblatt
Pale de rotor adaptif

(30) Priority: 23.02.2012 US 201213403364
(43) Date of publication of application: 28.08.2013
(73) Proprietor: Sikorsky Aircraft Corporation, Stratford, CT 06615 (US)
(72) Inventor: Scott, Mark W., Bethany, CT Connecticut 06524 (US)
(74) Representative: Schmitt-Nilson Schraud Waibel Wohlfrom Patentanwälte Partnerschaft mbB

(56) References cited:
- US-A- 2 476 002
- US-A- 2 759 548
- US-A- 5 711 651
- US-A- 5 813 625
- US-A1- 2005 123 400
- US-B1- 6 203 269

## Description

This invention was made with Government support under Other Transaction No. HR0011-10-9-0002 awarded by DARPA. The Government has certain rights in this invention.

Helicopter designs are typically the result of significant compromises to achieve both horizontal and vertical flight. This is particularly true of the helicopter rotor system. Depending on the helicopter, rotors may be optimized for, for example, high speed flight, low noise operation, high "g" maneuverability, or heavy lifting capability. Rotor design features enhancing vertical performance attributes, such as heavy lift capability, often directly conflict with features enhancing forward flight, especially high speed flight. The art would well receive a rotor system which can adapt to more than one of the above performance attributes.

US 5,711,651 discloses an active control device for reducing blade-vortex interactions (BVI) noise generated by a rotorcraft, such as a helicopter, comprises a trailing edge flap located near the tip of each of the rotorcraft's rotor blades. The flap may be actuated in any conventional way, and is scheduled to be actuated to a deflected position during rotation of the rotor blade through predetermined regions of the rotor azimuth, and is further scheduled to be actuated to a retracted position through the remaining regions of the rotor azimuth. Through the careful azimuth-dependent deployment and retraction of the flap over the rotor disk, blade tip vortices which are the primary source for BVI noise are (a) made weaker and (b) pushed farther away from the rotor disk (that is, larger blade-vortex separation distances are achieved).

US 2,476,002 discloses a wing structure of high strength and low weight having a duct therein for conducting a flow of air for boundary .control purposes and in which a large portion of the interior of the wing may be utilized for such duct through which passes the boundary layer control air to thus provide for a large volume of flow with relatively low velocities and thus with reduced energy losses.

US 2005/0123400 A1 discloses a rotor blade assembly provides a pitch control assembly to pitch the rotor blade about a rotor blade pitch axis. The pitch control assembly includes a trailing edge flap and a trailing edge servo flap that extend from the trailing edge of the rotor blade. The trailing edge flap is offset in the span wise direction relative to the trailing edge flap. The trailing edge servo flap is located upon a trailing edge servo flap arm linked to the trailing edge flap. To pitch the rotor blade, the trailing edge servo flap is pitched in a direction opposite the desired pitch direction of the trailing edge flap.

US 2,759,548 discloses a rotor blade having a cross-sectional shape which resembles an elongated flattened oval with a supplemental flap capable of being adjustably displaced with respect to the blade so as to attain the desired very high lift.

US 5,813,625 discloses a rotor assembly according to the preamble of claim 1, comprising a pressurized porous surface near the leading edge of a rotorcraft blade, is designed to be used as an active control device which alleviates the aerodynamics of blade vortex interactions (BVI) and thus the impulsive BVI noise levels and signature. The pressurized porous surface can be actuated on an azimuth-dependent deployment schedule or actuated continuously. The pressurized porous surface is supplied with either positively pressurized air, negatively pressurized air, or a combination of both, when actuated. The pressurized porous surface targets the local blade aerodynamics, rather than the vortex strength or blade/vortex separation distance. This targeting can be achieved through use of negatively pressurized air (suction) blowing in a direction normal to the blade surface to reduce the rotor blade's effective thickness resulting in a smaller leading edge radius as perceived by the vortex wake, and positively pressurized air (blowing) to increase the effective thickness resulting in an increase in the leading edge radius of the blade.

US 6,203,269 discloses blades, including helicopter rotor blades, gas turbine engine fan blades, air moving machinery fan blades, and the like, have an air inlet near the hub of the blade, which may be on the pressure side of the blade and/or near the leading edge or trailing edge nearer the tip of the blades, with an air plenum between the air inlet and the slots, whereby air is forced into the inlet, through the plenum and out of the slots into the flow adjacent the blades. The slots may be through the suction surface of the blade, typically near the boundary layer separation point, so that air flowing out of the slots into the boundary layer of the suction surface of the blade, thereby delay or prevent the onset of boundary layer separation, or to reduce supersonic shock. The inlet may be near the trailing edge of the blade, near the root, adjacent to the air inlet of the core of a jet engine, to suction off air and reduce fan wake blockage at the core inlet. The slots may be through the pressure surface adjacent the blade tip edge of fan blades to reduce blade tip leakage effects.

Embodiments of the invention may solve one or more of the problems of the art, with the solutions set forth in the independent claims and refinements as recited in the dependent claims.

A rotor assembly for a rotary wing aircraft includes the technical features of claim 1.

Further embodiments may comprise, alone or in combination, any one of the following features:
- One or more adaptive devices may include at least one flap disposed at a trailing edge of at least one rotor blade of the plurality of rotor blades.
- A position of the at least one flap may be controlled by one or more electromechanical actuators disposed at the at least one rotor blade,
- Activation of the one at least one flap at a selected rotational speed of the rotor assembly may result in suppression of at least one of vibration or noise of the rotor assembly.
- Activation of the at least flap in a retreating portion of rotation of the rotor blade may result in an increase in at least one of lift of the rotor assembly or flight speed of the aircraft.

A method of operating a rotor assembly is defined in claim 6.

Further embodiments of such method may include, alone or in combination, any one of the following features:
- Activating one or more adaptive devices may comprise activating at least one flap disposed at a trailing edge of at least one rotor blade of the plurality of rotor blades.
- The at least one flap may be activated at a selected rotational speed of the rotor assembly.
- Changing one or more operational characteristics of the rotor assembly may comprise suppressing at least one of vibration or noise of the rotor assembly.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an embodiment of a rotary wing aircraft;
FIG. 2 is a plan view of an embodiment of a rotor blade;
FIG. 3 is a plan view of an embodiment of a rotor blade including an internal duct;
FIG. 4 is a perspective view of an embodiment of a rotor blade having an air inlet;
FIG. 5 is a cross-sectional view of an embodiment of a rotor blade having an internal duct; and
FIG. 6 is a perspective view of an embodiment of a rotor blade having an air outlet.

The detailed description explains embodiments of the invention, together with advantages and features, by way of example with reference to the drawings.

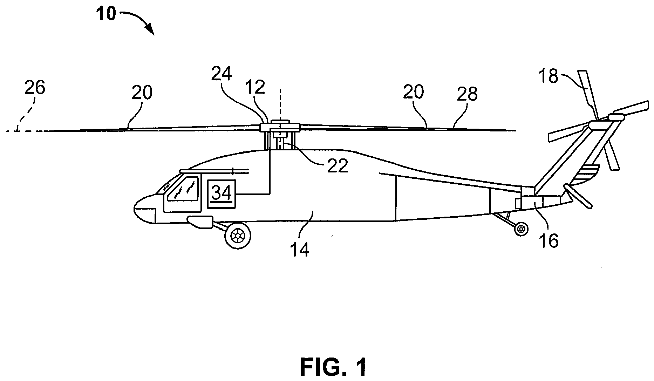

FIG. 1 is a schematic illustration of a rotary wing aircraft 10 having a main rotor assembly 12. The aircraft 10 includes an airframe 14 having an extending tail 16 at which is mounted an anti-torque rotor 18. Although the configuration illustrated is a single main rotor helicopter, it is to be appreciated that other machines such as tandem rotor helicopters, turbo-props, tilt-rotor aircraft, and co-axial rotorcraft will also benefit from the system of the present disclosure. The main rotor assembly 12 includes a plurality of rotor blades 20 located about a rotor shaft 22. The rotor blades 20 are operably connected to the rotor shaft 22 via a swashplate 24, which allows for a change in pitch of the rotor blades 20 about a blade axis 26.

The rotor blades 20 include one or more active adaptive devices which allow the rotor blades 20 and main rotor assembly 12 to adapt to different flight missions and the unique requirements of each flight mission. The adaptive devices, when selectively activated based on mission requirements, may, for example, increase maximum rotor blade 20 lift, suppress characteristics such as vibration and/or noise, increase flight speed, improve hover performance at high gross weights, increase maneuverability, or the like. A primary goal is to use the combination of multiple devices to enhance overall rotor attributes and performance. An on blade device typically enhances one or two rotor attributes such as low noise, low vibration, efficiency, maneuverability, payload, or speed. The purpose is to use multiple devices to provide a rotor increased capabilities among all these attributes. The devices can be turned on or off as the mission segment requires. The devices are also designed to work synergistically to maximize rotor capabilities.

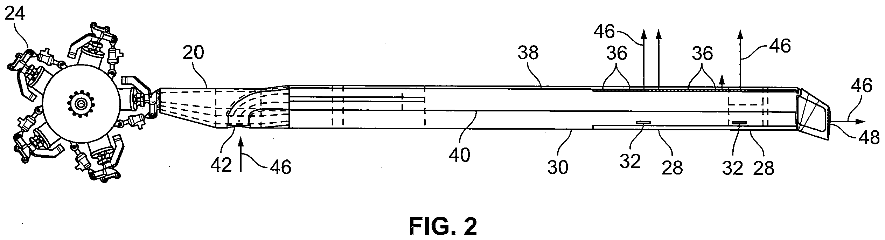

Referring to FIG. 2, one example of adaptive device is one or more flaps 28 located, in some embodiments, at a trailing edge 30 of the rotor blade 20. Flaps 28 may be in the form of conventional plain flaps, movable Gurney flaps, or other trailing edge devices used to change airfoil lift, drag, and moment. The flaps 28 are driven by one or more actuators, for example, one or more electromechanical actuators 32 or pneumatic actuators or the like located at the rotor blade 20. The electromechanical actuators 32 are operably connected to the flaps 28 and to a flight control system of the aircraft 10, for example, a flight control computer 34 (shown in FIG. 1). When the one or more flaps 28 are activated at the same or higher harmonic frequencies of rotational speed of the rotor assembly 12, for example, the flaps 28 are activated and deactivated at a rate at or greater than once per revolution of the rotor assembly 12, vibration and noise of the rotor assembly 12 can be suppressed, and efficiency can be increased. Further, by activating the one or more flaps 28 discretely at a retreating side of the rotor assembly 12, at each rotor blade 20 when it is retreating, the flap 28 creates a higher lift coefficient, thus creating more blade lift for the same retreating side airflow. This advantageously postpones retreating blade stall to higher flight airspeeds. Also, activating flaps 28 collectively downwardly when the aircraft 10 is in hover effectively twists the rotor blade 20. The increased twist is beneficial at higher gross weights because the airflow through the rotor 12 increases, and increasing the twist better aligns the rotor blades 20 with the higher airflow. The net result is higher rotor efficiency at high gross aircraft 10 weights.

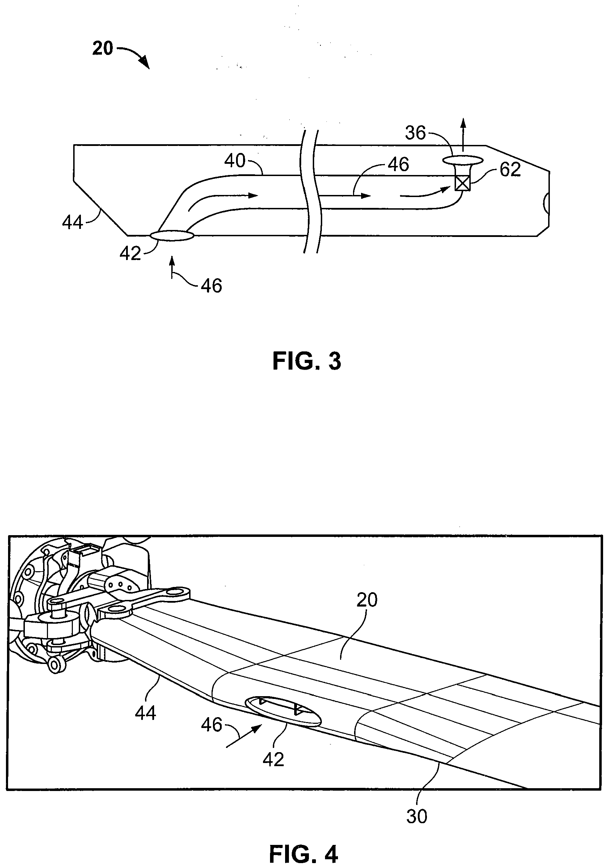

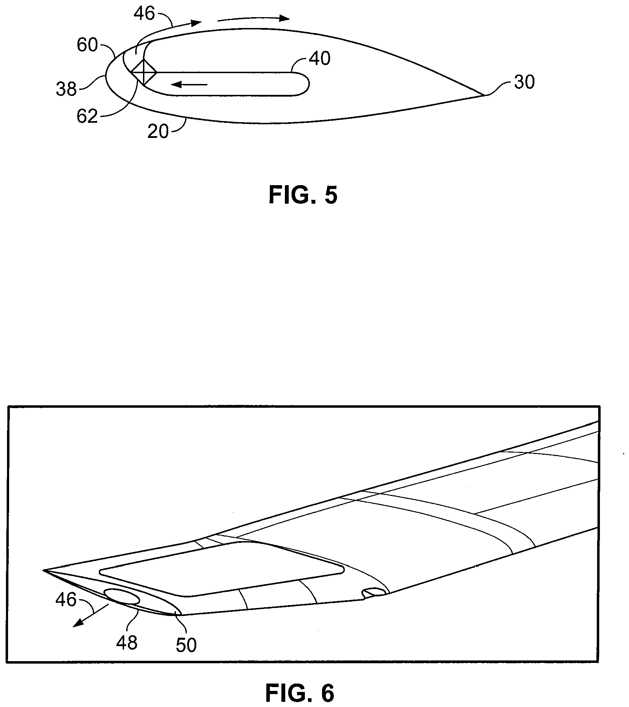

Referring to FIG. 3, the rotor blade 20 includes one or more air outlets 36 at or near a leading edge 38 of the rotor blade 20. In some embodiments, the air outlets 36 are located at a leading edge upper surface 60 of the rotor blade 20. The air outlets 36 may be slot shaped and are connected to an internal spar air duct 40 extending along a span of the rotor blade 20 from a duct inlet 42 to the air outlets 36. The duct 40 is fed by the duct inlet 42 (best shown in FIG. 4), which is located at or near a root 44 of the trailing edge 30. Referring again to FIG. 3, as the rotor blade 20 rotates, an airflow 46 is centrifugally pumped into the duct 40 through the duct inlet 42 and is urged toward the air outlets 36. The airflow 46 exits the air outlets 36 to increase maximum blade lift. Referring to FIG. 5, maximum blade lift is increased by blowing the air through the air outlets 36 substantially tangentially to the upper surface in a rearward direction, toward the trailing edge 30 of the rotor blade 20. The airflow 46 energizes the boundary layer and delays separation as angle of attack is increased thus increasing maximum blade lift. Referring again to FIG. 3, flow through the air outlets 36 is controlled (turned on/off or metered) by one or more valves 62 located between the duct 40 and the air outlets 36.

Operation of the one or more valves 60 may be controlled by the flight control computer 34.

It is highly desirable to reduce the noise of rotor assembly 12 in flight. A powerful means to reduce noise is to reduce rotational speed of rotor assembly 12. However, rotational speed reductions come at the expense of rotor assembly lift and aircraft speed and maneuverability. The reductions are due to rotor assembly stall occurring at reduced flight speeds and/or reduced gross weights. In order to maintain aircraft speed and maneuverability and not sacrifice aircraft gross weight, the flaps 28 and air outlets 34 are utilized at lower rotor assembly rotational speeds. Thus rotor assembly lift, and aircraft speed and maneuverability can be maintained at adequate levels. As such, synergy between flaps 28, outlets 34, and the rotational speed of the rotor assembly 12 reduces rotor assembly noise levels. In some embodiments rotational speed reductions between about 10% and 15% can be attained. In situations where an increased rotor assembly rotational speed is required or desired, such as when increased gross weight capability is desired, another active measure may be utilized to reduce rotor assembly 12 noise. For example, the rotor blade 20 includes a tip jet outlet 48 (shown in FIG. 6) located at a rotor blade tip 50 and connected to the duct 40. At increased rotor assembly speeds, airflow 46 through the duct 40 is directed through the tip jet outlet 48 instead of, or in addition to, through the air outlets 36.

Airflow 46 pumped through the duct 40 creates a high pressure mass source at the blade tip 50. The mass source, when modulated by releasing airflow 46 through the tip jet valve and outlet 48, at a once per rotor 12 revolution frequency cancels rotor blade 20 thickness noise. The airflow 46 released through the tip jet outlet 48 creates a positive pressure pulse shape which counteracts a negative pressure pulse shape of the rotor blade 20. Rotor blade 20 noise is a result of this negative pressure pulse and by counteracting it with the positive pressure pulse the rotor blade 20 noise is reduced. In some embodiments, the airflow 46 through the tip jet outlet 48 is activated when the rotor blade 20 is advancing. Further, the airflow 46 through the tip jet outlet 48 may be modulated as a substantially constant flow to diffuse a vortex at the blade tip 50, thereby reducing blade vortex interaction noise.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotor assembly (12) for a rotary wing aircraft (10) comprising:
a plurality of rotor blades (20) operably connected to a rotor shaft (22); and
active adaptive devices disposed at one or more rotor blades (20) of the plurality of rotor blades (20), the active adaptive devices operably connected to an aircraft flight control system (34) such that, when activated, the active adaptive devices change one or more operational characteristics of the rotor assembly (12),
**characterized in that** the active adaptive devices include:
a spar air duct (40) extending along the one or more rotor blades (20), the spar air duct (40) including an inlet (42), disposed at or near a root (44) of a trailing edge (30) of the rotor blade (20), and an outlet (34), disposed at or near a leading edge (38) of the rotor blade (20);
a valve (62) configured to selectively turn on an airflow (46) through the at least one outlet (36) for a first mission and turn off an airflow (46) through the at least one outlet (36) for a second mission; and
a tip jet outlet (48) disposed at a blade tip (50) of the one or more rotor blades (20), the tip jet outlet (48) connected to the spar air duct (40),
wherein the rotor assembly (12) is configured to selectively urge airflow (46) through the spar air duct (40) out the at least one outlet (36) to increase lift of the one or more rotor blades (20) in the first mission, and to selectively urge airflow (46) out the tip jet outlet (48) to reduce noise of the rotor assembly (12) in the second mission.

2. The rotor assembly (12) of claim 1, wherein the adaptive devices further include at least one flap (28) disposed at a trailing edge (30) of at least one rotor blade of the plurality of rotor blades (20).

3. The rotor assembly (12) of claim 2, wherein a position of the at least one flap (28) is controlled by one or more electromechanical actuators (32) disposed at the at least one rotor blade.

4. The rotor assembly (12) of claim 2 or 3, wherein activation of the one at least one flap (28) at a selected rotational speed of the rotor assembly (12) results in suppression of at least one of vibration or noise of the rotor assembly (12).

5. The rotor assembly (12) of any of claims 2 to 4, wherein activation of the at least one flap (28) in a retreating portion of rotation of the rotor blade (20) results in an increase in at least one of lift of the rotor assembly (12) or flight speed of the aircraft (10).

6. A method of operating the rotor assembly (12) of any one of the preceding claims, comprising:
rotating the plurality of rotor blades (20) about a rotor shaft (22);
activating the active adaptive devices disposed at the one or more rotor blades (20) of the plurality of rotor blades (20); and
changing the one or more operational characteristics of the rotor assembly (12) via the activation of the active adaptive devices.

7. The method of claim 6, wherein activating one or more adaptive devices comprises activating at least one flap (28) disposed at a trailing edge (30) of at least one rotor blade of the plurality of rotor blades (20).

8. The method of claim 7, wherein the at least one flap (28) is activated at a selected rotational speed of the rotor assembly (12).

9. The method of claim 8, wherein changing one or more operational characteristics of the rotor assembly (12) comprises suppressing at least one of vibration or noise of the rotor assembly (12).

## Patentansprüche

1. Rotoranordnung (12) für ein Drehflügelluftfahrzeug (10), umfassend:
eine Vielzahl von Rotorblättern (20), die in Wirkverbindung mit einer Rotorwelle (22) stehen; und
aktive adaptive Vorrichtungen, die an einem Rotorblatt oder mehreren Rotorblättern (20) aus der Vielzahl von Rotorblättern (20) angeordnet sind, wobei die aktiven adaptiven Vorrichtungen so in Wirkverbindung mit einem Flugsteuerungssystem (34) des Luftfahrzeugs stehen, dass die aktiven adaptiven Vorrichtungen, wenn sie aktiviert werden, eine oder mehrere Betriebseigenschaft(en) der Rotoranordnung (12) verändern,
**dadurch gekennzeichnet, dass** die aktiven adaptiven Vorrichtungen Folgendes beinhalten:
einen Holmluftkanal (40), der entlang des einen Rotorblatts oder der mehreren Rotorblätter (20) verläuft, wobei der Holmluftkanal (40) einen Einlass (42), der an oder nahe einer Wurzel (44) einer Hinterkante (30) des Rotorblatts (20) angeordnet ist, und
einen Auslass (34), der an oder nahe einer Vorderkante (38) des Rotorblatts (20) angeordnet ist, umfasst;
ein Ventil (62), das konfiguriert ist, um selektiv einen Luftstrom (46) durch den mindestens einen Auslass (36) für eine erste Aufgabe anzustellen und den Luftstrom (46) durch den mindestens einen Auslass (36) für eine zweite Aufgabe abzustellen; und
einen Spitzendüsenauslass (48), der an einer Blattspitze (50) des einen Rotorblatts oder der mehreren Rotorblätter (20) angeordnet ist, wobei der Spitzendüsenauslass (48) mit dem Holmluftkanal (40) verbunden ist,
wobei die Rotoranordnung (12) konfiguriert ist, um selektiv einen Luftstrom (46) durch den Holmluftkanal (40) aus dem mindestens einen Auslass (36) herauszudrängen, um den Auftrieb des einen Rotorblatts oder der mehreren Rotorblätter (20) bei der ersten Aufgabe zu erhöhen, und um selektiv den Luftstrom (46) aus dem Spitzendüsenauslass (48) herauszudrängen, um das Geräusch der Rotoranordnung (12) bei der zweiten Aufgabe zu verringern.

2. Rotoranordnung (12) nach Anspruch 1, wobei die adaptiven Vorrichtungen ferner mindestens eine Klappe (28) beinhalten, die an einer Hinterkante (30) des mindestens einen Rotorblatts aus der Vielzahl von Rotorblättern (20) angeordnet ist.

3. Rotoranordnung (12) nach Anspruch 2, wobei eine Position der mindestens einen Klappe (28) durch einen oder mehrere elektromechanische(n) Aktuator(en) (32), der/die an dem mindestens einen Rotorblatt angeordnet ist/sind, gesteuert wird.

4. Rotoranordnung (12) nach Anspruch 2 oder 3, wobei die Aktivierung der mindestens einen Klappe (28) bei einer ausgewählten Drehzahl der Rotoranordnung (12) zur Unterdrückung mindestens eines aus der Vibration oder dem Geräusch der Rotoranordnung (12) führt.

5. Rotoranordnung (12) nach einem der Ansprüche 2 bis 4, wobei die Aktivierung der mindestens einen Klappe (28) in einem rücklaufenden Abschnitt der Drehung des Rotorblatts (20) zu einer Erhöhung mindestens eines aus dem Auftrieb der Rotoranordnung (12) oder der Fluggeschwindigkeit des Luftfahrzeugs (10) führt.

6. Verfahren zum Betreiben der Rotoranordnung (12) nach einem der vorstehenden Ansprüche, umfassend:
Drehen der Vielzahl von Rotorblättern (20) um eine Rotorwelle (22) ;
Aktivieren der aktiven adaptiven Vorrichtungen, die an dem einen Rotorblatt oder den mehreren Rotorblättern (20) aus der Vielzahl von Rotorblättern (20) angeordnet sind; und
Verändern der einen oder der mehreren Betriebsbedingung(en) der Rotoranordnung (12) über die Aktivierung der aktiven adaptiven Vorrichtungen.

7. Verfahren nach Anspruch 6, wobei das Aktivieren der einen oder der mehreren adaptiven Vorrichtung(en) das Aktivieren mindestens einer Klappe (28), die an einer Hinterkante (30) des mindestens einen Rotorblatts aus der Vielzahl von Rotorblättern (20) angeordnet ist, umfasst.

8. Verfahren nach Anspruch 7, wobei die mindestens eine Klappe (28) bei einer ausgewählten Drehzahl der Rotoranordnung (12) aktiviert wird.

9. Verfahren nach Anspruch 8, wobei das Verändern der einen oder der mehreren Betriebseigenschaft(en) der Rotoranordnung (12) das Unterdrücken mindestens eines aus der Vibration oder dem Geräusch der Rotoranordnung (12) umfasst.

## Revendications

1. Ensemble rotor (12) pour un aéronef à voilure tournante (10) comprenant :
une pluralité de pales de rotor (20) connectées de manière opérationnelle à un arbre de rotor (22) ; et
des dispositifs actifs adaptatifs disposés au niveau d'une ou de plusieurs pales de rotor (20) de la pluralité de pales de rotor (20), les dispositifs actifs adaptatifs étant connectés de manière opérationnelle à un système de commande de vol d'un aéronef (34) de sorte que, lorsqu'ils sont activés, les dispositifs actifs adaptatifs modifient une ou plusieurs caractéristiques opérationnelles de l'ensemble rotor (12),
**caractérisé en ce que** les dispositifs actifs adaptatifs incluent :
une conduite d'air de longeron (40) s'étendant le long de la ou des plusieurs pales de rotor (20), la conduite d'air de longeron (40) incluant un orifice d'admission (42), disposé au niveau ou à proximité d'une racine (44) d'un bord de fuite (30) de la pale de rotor (20), et un orifice d'évacuation (34), disposé au niveau ou à proximité d'un bord d'attaque (38) de la pale de rotor (20) ;
une soupape (62) configurée pour activer de manière sélective un flux d'air (46) à travers l'au moins un orifice d'évacuation (36) pour une première mission et désactiver un flux d'air (46) à travers l'au moins un orifice d'évacuation (36) pour une seconde mission ; et
une sortie de jet de pointe (48) disposée au niveau d'une pointe de pale (50) de la ou des plusieurs pales de rotor (20), la sortie de jet de pointe (48) étant connectée à la conduite d'air de longeron (40),
dans lequel l'ensemble rotor (12) est configuré pour contraindre de manière sélective l'écoulement d'un flux d'air (46) à travers la conduite d'air de longeron (40) et hors de l'au moins un orifice d'évacuation (36) pour accroître la portance de la ou des plusieurs pales de rotor (20) dans la première mission, et pour contraindre de manière sélective l'écoulement du flux d'air (46) hors de la sortie de jet de pointe (48) afin de réduire le bruit de l'ensemble rotor (12) dans la seconde mission.

2. Ensemble rotor (12) selon la revendication 1, dans lequel les dispositifs adaptatifs incluent en outre au moins un volet (28) disposé au niveau d'un bord de fuite (30) d'au moins une pale de rotor de la pluralité de pales de rotor (20).

3. Ensemble rotor (12) selon la revendication 2, dans lequel une position de l'au moins un volet (28) est commandée par un ou plusieurs actionneurs électromécaniques (32) disposés au niveau de l'au moins une pale de rotor.

4. Ensemble rotor (12) selon la revendication 2 ou 3, dans lequel l'activation de l'au moins un volet (28) à une vitesse de rotation choisie de l'ensemble rotor (12) entraîne la suppression d'au moins un d'une vibration ou d'un bruit de l'ensemble rotor (12).

5. Ensemble rotor (12) selon l'une quelconque des revendications 2 à 4, dans lequel l'activation de l'au moins un volet (28) dans une partie de retrait de rotation de la pale de rotor (20) entraîne une augmentation d'au moins une de la portance de l'ensemble rotor (12) ou de la vitesse de vol de l'aéronef (10) .

6. Procédé d'utilisation de l'ensemble rotor (12) selon l'une quelconque des revendications précédentes, comprenant :
la rotation de la pluralité de pales de rotor (20) autour d'un arbre de rotor (22) ;
l'activation des dispositifs actifs adaptatifs disposés au niveau de la ou des plusieurs pales de rotor (20) de la pluralité de pales de rotor (20) ; et
la modification de la ou des plusieurs caractéristiques opérationnelles de l'ensemble rotor (12) via l'activation des dispositifs actifs adaptatifs.

7. Procédé selon la revendication 6, dans lequel l'activation d'un ou de plusieurs dispositifs adaptatifs comprend l'activation d'au moins un volet (28) disposé au niveau d'un bord de fuite (30) d'au moins une pale de rotor de la pluralité de pales de rotor (20).

8. Procédé selon la revendication 7, dans lequel l'au moins un volet (28) est activé à une vitesse de rotation choisie de l'ensemble rotor (12).

9. Procédé selon la revendication 8, dans lequel la modification d'une ou de plusieurs caractéristiques opérationnelles de l'ensemble rotor (12) comprend la suppression d'au moins un d'une vibration ou d'un bruit de l'ensemble rotor (12).
